# FASCICULE DE BREVET EUROPEEN

(11) **EP 1 078 014 B1**
(45) Date de publication et mention de la délivrance du brevet: **04.10.2001**
(21) Numéro de dépôt: 99915816.5
(22) Date de dépôt: 22.04.1999
(51) Int. Cl.: C08J 7/04, C09D 5/02, C03C 17/00

(54) **MATERIAU FILMOGENE POUR OPACIFIER TEMPORAIREMENT DES SURFACES TRANSPARENTES OU TRANSLUCIDES**
FILMBILDNERMATERIAL ZUM TEMPORÄREN UNDURCHSICHTIGMACHEN VON DURCHSICHTIGEN ODER LICHTDURCHLÄSSIGEN OBERFLÄCHEN
FILM-FORMING SUBSTANCE FOR TEMPORARILY OPACIFYING TRANSPARENT OR TRANSLUCENT SURFACES

(30) Priorité: 23.04.1998 FR 9805341
(43) Date de publication de la demande: 28.02.2001
(73) Titulaire: Douarre, Patrick, 83320 Carqueiranne (FR)
(72) Inventeur: Douarre, Patrick, 83320 Carqueiranne (FR)
(74) Mandataire: Marek, Pierre
(86) Numéro de dépôt international: FR9900960
(87) Numéro de publication internationale: WO9955769

(56) Documents cités:
- FR-A- 2 333 015
- US-A- 4 626 559
- US-A- 4 882 372
- US-A- 5 256 716
- DATABASE WPI Section Ch, Week 8749 Derwent Publications Ltd., London, GB; Class A14, AN 87-344269 XP002087644 & JP 62 246984 A (MITSUBISHI KASEI VINYL KK), 28 octobre 1987 (1987-10-28)

## Description

La présente invention concerne un matériau filmogène pour opacifier temporairement des surfaces transparentes ou translucides en verre ou en matière plastique rigide ou souple (film), par exemple dans le but de protéger de l'ensoleillement, les cultures en serres.

Selon une application particulièrement intéressante, bien que nullement limitative, la présente invention répond à un problème rencontré actuellement par les agriculteurs et horticulteurs qui doivent protéger leurs cultures en serres des effets de l'ensoleillement.

Le problème est de trouver un matériau opacifiant, résistant à la pluie, et s'éliminant facilement et rapidement en fin de saison à fort ensoleillement, ou en cours de saison chaude passagèrement sans soleil, si besoin est.

Les produits utilisés actuellement ne permettent pas de solutionner ce problème de façon satisfaisante, si ce n'est que partiellement, en appliquant, soit des liquides irritants à base d'acides, très nuisibles pour l'environnement, les armatures des serres et les films en matière plastique, soit exceptionnellement des liquides à base d'agents alcalins dont l'efficacité du nettoyage sur la peinture associée est nettement insuffisante et n'est pas immédiate.

Il est pratiquement toujours nécessaire de brosser les vitrages des serres pour obtenir un bon résultat ; ce qui n'est guère apprécié des agriculteurs, compte tenu des pertes de temps et du danger représenté par les accès difficiles en toitures.

Le document US 4.626.559 A propose une peinture ornementale temporaire destinée à être appliquée sur des véhicules pour indiquer par exemple "leurs sponsors" dans une course et qui a l'avantage de ne pas abîmer le revêtement extérieur de ces derniers. Cette peinture comprend une résine acrylique acide en dispersion aqueuse et s'élimine à l'eau en frottant.

D'autre part, l'élimination de matériaux écrans traditionnels à base de dispersion aqueuse de copolymères de styrène et d'ester acrylique ou copolymères d'acrylate s'avère impossible, en milieu alcalin.

L'invention concerne un matériau filmogène à pulvériser sur des parois transparentes ou translucides, en verre ou en matière plastique rigide ou souple, de façon à former un écran au soleil.

Selon une première disposition caractéristique, le matériau filmogène opacifiant est remarquable par le fait qu'il contient, dans de l'eau faiblement alcaline :
- au moins deux liants constitués par deux résines à base de dérivés acryliques, possédant un indice d'acide supérieur à 60, l'une étant sous forme solide et l'autre étant en dispersion aqueuse ;
   et
- au moins une charge ou un pigment.

Cette charge ou pigment peut être choisi parmi les suivants :
- carbonate de calcium ;
- silice ou silicate ;
- sulfate de baryum ;
- oxyde de titane ;
- oxyde de zinc ;
- pigment coloré minéral ou organique.

Ce matériau présente une bonne résistance à l'eau de pluie tout en ayant la particularité de pouvoir s'éliminer facilement et rapidement par simple pulvérisation d'une solution aqueuse faiblement alcaline, contenant de 0,2 à 3 % en poids au total, d'un ou plusieurs agents alcalins par exemple choisis parmi les suivants :
- hydroxyde de sodium ;
- carbonate de sodium ;
- sel de sodium de l'acide éthylène diamine tétraacétique (EDTA).

Il est à noter que ce matériau a également la propriété de s'éliminer totalement par une solution à base d'acide, non classée irritante.

Cette efficacité est obtenue grâce à la présence, en milieu aqueux légèrement alcalin, d'un liant spécifique dans la composition. Il s'agit d'une résine ou l'association de plusieurs résines, à base de dérivés acryliques à fort indice d'acide (supérieur à 60), contrairement aux dispersions aqueuses de copolymères de styrène et d'ester acryliques ou de copolymères d'acrylate utilisées actuellement, et qui restent insaponifiables.

Un bon compromis entre la résistance à l'eau de pluie et la facilité d'élimination ultérieure du film opacifiant en milieu légèrement alcalin, peut être obtenu en associant deux liants acryliques à indice d'acide élevé (l'un sous forme solide et l'autre en dispersion aqueuse).

En faisant varier la proportion de l'un par rapport à l'autre, on favorise soit la facilité d'élimination (grâce à l'acrylique solide), notamment en cas d'èlïmination précoce du film opacifiant, soit la résistance à l'eau de pluie (grâce à l'acrylique en dispersion aqueuse).

Des résultats intéressants sont, par exemple, obtenus avec un matériau filmogène opacifiant se présentant sous forme d'une peinture blanche dont la composition en poids est la suivante :

| | |
|---|---|
| Ammoniaque à 25 % | 0,2 à 0,6 % |
| Liant sec à base de dérivés acryliques (solide et en dispersion aqueuse d'indice d'acide supérieur à 60) | 0,5 à 3 % |
| Agent épaississant à base d'éther cellulosique | 0,1 à 0,5 % |
| Agent dispersant à base de polyacrylate d'ammonium ou de polycarboxylate de potassium | 0,1 à 2 % |
| Agent antimousse | 0,1 à 0,4 % |
| Agent bactéricide | 0,1 à 0,3 % |
| Carbonate de calcium et pigment organique, de grande finesse | 40 à 60 % |
| Eau | complément à 100 % |

Un kilogramme de cette formule de peinture est dilué avec trois litres d'eau avant d'être appliqué, le produit filmogène après application et séchage à l'air présentant un bon pouvoir opacifiant. Il est possible de faire varier le taux de dilution avec de l'eau suivant le degré d'opacité et la résistance à l'eau de pluie souhaités.

De façon avantageuse, le liant sec à base de dérivés acryliques est à base de méthacrylate de méthyle.

Hormis le liant qui est très spécifique, tous les autres constituants sont couramment utilisés dans toutes les peintures bâtiment en phase aqueuse, à savoir :
- l'agent épaississant, généralement à base d'éther cellulosique, permet de régler la viscosité de la peinture de façon à éviter la décantation au stockage ;
- l'agent dispersant permet de faciliter la dispersion de la charge de carbonate de calcium, de façon à éviter les agglomérats de particules et une évolution de la viscosité dans le temps. Les produits couramment utilisés sont à base de polyacrylate d'ammonium ou de polycarboxylate de potassium ;
- l'agent bactéricide permet la conservation en pot de la peinture. On peut utiliser une solution aqueuse à base de chloracétamide ;
- l'agent antimousse permet d'éviter le bullage au moment de la fabrication de la peinture. On utilise généralement un mélange de substances hydrophobes dans une huile minérale paraffinique ;
- le carbonate de calcium est une charge permettant de donner le pouvoir opacifiant de la peinture. Dans le cas du matériau filmogène opacifiant pour serres, on utilise de préférence une charge de granulométrie très fine, de l'ordre de 1 µm.

D'autres constituants peuvent s'ajouter ou remplacer le carbonate de calcium ci-dessus, à savoir :
- charges à base de carbonate de calcium de différentes granulométries ;
- charges à base de silice ou silicate ;
- charges à base de sulfate de baryum ;
- pigments blancs à base d'oxyde de titane ou de zinc ;
- pigments colorés minéraux ou organiques.

L'invention concerne également le procédé pour opacifier temporairement des surfaces translucides ou transparentes, telles que couvertures de serres agricoles ou horticoles en verre ou en matière plastique rigide ou souple, ce procédé étant remarquable en ce que l'on applique sur ces surfaces, au début des périodes de fort ensoleillement, un matériau filmogène opacifiant tel que décrit ci-dessus, et en ce que l'on enlève ensuite le film de peinture précédemment appliqué au début des périodes de faible ensoleillement, au moyen d'une solution aqueuse de nettoyage contenant au moins un agent alcalin, choisi parmi les suivants :
- hydroxyde de sodium ;
- carbonate de sodium ;
- sel de sodium de l'acide éthylène diamine tétraacétique (EDTA) ;
dont la proportion totale en poids est de 0,2 à 3 %.

## Revendications

1. Matériau filmogène pour opacifier temporairement des surfaces transparentes ou translucides en verre ou en matière plastique rigide ou souple, telles que, par exemple, couvertures de serres agricoles ou horticoles, **caractérisé par** le fait qu'il contient, dans de l'eau légèrement alcaline :
• au moins deux liants constitués par deux résines à base de dérivés acryliques, possédant un indice d'acide supérieur à 60, l'une étant sous forme solide et l'autre étant en dispersion aqueuse ;
et
• au moins une charge ou un pigment.

2. Matériau filmogène opacifiant selon la revendication 1, **caractérisé en ce que** la proportion du liant sec dans la composition dudit matériau, est de l'ordre de 0,5 à 3 % de son poids total.

3. Matériau filmogène selon l'une quelconque des revendications 1 ou 2, **caractérisé en ce que** le liant sec est à base de méthacrylate de méthyle.

4. Matériau filmogène opacifiant suivant l'une quelconque des revendications 1 à 3, **caractérisé en ce qu'**il contient en outre, au moins un additif choisi parmi les suivants :
- agent épaississant ;
- agent dispersant ;
- agent antimousse ;
- agent bactéricide.

5. Matériau filmogène opacifiant selon l'une quelconque des revendications 1 à 4, **caractérisé en ce qu'**il est constitué par un mélange des composants ci-après, dont les pourcentages sont donnés en poids :
| | |
|---|---|
| Ammoniaque à 25 % | 0,2 à 0,6 % |
| Liant sec à base de dérivés acryliques (solide et en dispersion aqueuse d'indice d'acide supérieur à 60) | 0,5 à 3 % |
| Agent épaississant à base d'éther cellulosique | 0,1 à 0,5 % |
| Agent dispersant à base de polyacrylate d'ammonium ou de polycarboxylate de potassium | 0,1 à 2 % |
| Agent antimousse | 0,1 à 0,4 % |
| Agent bactèricide | 0,1 à 0,3 % |
| Carbonate de calcium et pigment organique, de grande finesse | 40 à 60 % |
| Eau | complément à 100% |

6. Procédé pour opacifier temporairement des surfaces translucides ou transparentes, telles que, par exemple, couvertures de serres agricoles ou horticoles en verre ou en matière plastique rigide ou souple, **caractérisé en ce que** l'on applique sur ces surfaces, un matériau filmogène opacifiant selon l'une quelconque des revendications 1 à 5, et **en ce que** l'on enlève ultérieurement la couche précédemment appliquée et séchée à l'air, par simple pulvérisation d'une solution aqueuse de nettoyage contenant au moins un agent alcalin, choisi parmi les suivants :
- hydroxyde de sodium ;
- carbonate de sodium ;
- sel de sodium de l'acide éthyiène diamine tétraacétique (EDTA) ;
dont la proportion totale en poids est de 0,2 à 3 %.

## Patentansprüche

1. Filmbildnermaterial zum temporären Undurchsichtigmachen von durchsichtigen oder lichtdurchlässigen Oberflächen aus Glas oder starrem oder flexiblem Kunststoff, wie beispielsweise Abdeckungen von Gewächshäusern für Landwirtschaft oder Gartenbau, **dadurch gekennzeichnet, daß** es im leicht alkalischen Wasser enthält:
- mindestens zwei Bindemittel, die aus zwei Harzen auf der Basis von Acrylderivaten gebildet werden, die einen über 60 liegenden Säurewert haben, wobei eines in fester Form und das andere als wässrige Dispersion vorliegt;
und
- mindestens einen Füllstoff oder einen Farbstoff.

2. Filmbildnermaterial zum Undurchsichtigmachen nach Anspruch 1, **dadurch gekennzeichnet, daß** der Anteil des trockenen Bindemittels in der Zusammensetzung des Materials in der Größenordnung von 0,5 bis 3% des Gesamtgewichts liegt.

3. Filmbildnermaterial nach einem der Ansprüche 1 oder 2, **dadurch gekennzeichnet, daß** das trockene Bindemittel auf Methylmethacrylat basiert.

4. Filmbildnermaterial zum Undurchsichtigmachen nach einem der Ansprüche 1 bis 3, **dadurch gekennzeichnet, daß** es außerdem mindestens einen der folgenden Zusätze enthält:
- Verdickungsmittel;
- Dispergiermittel;
- Entschäumungsmittel;
- Bakterizid.

5. Filmbildnermaterial zum Undurchsichtigmachen nach einem der Ansprüche 1 bis 4, **dadurch gekennzeichnet, daß** es aus einer Mischung der nachfolgenden Komponenten gebildet wird, deren prozentualer Anteil als Gewichtsanteil angegeben ist:
| | |
|---|---|
| 25%ige Ammoniaklösung | 0,2 bis 0,6 % |
| trockenes Bindemittel auf der Basis von Acrylderivaten (fest und in wässriger Dispersion mit einem Säurewert über 60) | 0,5 bis 3% |
| Verdickungsmittel auf der Basis von Zelluloseether | 0,1 bis 0,5 % |
| Dispergiermittel auf der Basis von Ammoniumpolyacrylat oder Kaliumpolycarboxylat | 0,1 bis 2 % |
| Entschäumungsmittel | 0,1 bis 0,4 % |
| Bakterizid | 0,1 bis 0,3 % |
| Kalziumkarbonat und organische Farbstoffe großer Feinheit | 40 bis 60 % |
| Wasser | Ergänzung bis 100% |

6. Verfahren zum temporären Undurchsichtigmachen von durchsichtigen oder lichtdurchlässigen Oberflächen, wie beispielsweise Abdeckungen von Gewächshäusern für Landwirtschaft oder Gartenbau aus Glas oder starrem oder flexiblem Kunststoff, **dadurch gekennzeichnet, daß** auf diese Oberfläche ein Filmbildnermaterial zum Undurchsichtigmachen nach einem der Ansprüche 1 bis 5 aufgebracht wird, und dadurch, **daß** später die vorher aufgebrachte und an der Luft getrocknete Schicht durch ein einfaches Aufstäuben einer wässrigen Reinigungslösung entfernt wird, die mindestens eines der nachfolgenden alkalischen Mittel enthält:
- Natriumhydroxid;
- Natriumkarbonat;
- Natriumsalz der Ethylendiamintetraessigsäure (EDTA) ;
deren Gesamtgewichtsanteil zwischen 0,2 bis 3% beträgt.

## Claims

1. Film-forming material for temporarily opaquing transparent or translucent surfaces made of glass or a hard or soft plastic, such as for example agricultural or horticultural glasshouse covers, **characterised by** the fact that it contains, in slightly alkaline water:
• at least two binders constituted by two resins based on acrylic derivatives, having an acid index higher than 60, one resin being in solid form and the other in an aqueous dispersion;
and
• at least one filler or pigment.

2. Opaquing film-forming material according to claim 1, **characterised in that** the proportion of dry binder in the composition of said material is in the order of 0.5 to 3 % of its total weight.

3. Film-forming material according to either of claims 1 and 2, **characterised in that** the dry binder is based on methyl methacrylate.

4. Opaquing film-forming material according to any of claims 1 to 3, **characterised in that** it furthermore contains at least one additive chosen from the following:
- thickening agent;
- dispersing agent;
- anti-foaming agent;
- bactericidal agent.

5. Opaquing film-forming material according to any of claims 1 to 4, **characterised in that** it is constituted by a mixture of the following components in the percentages by weight specified:
| | |
|---|---|
| 25% ammonia | 0.2 to 0.6 % |
| Dry binder based on acrylic derivatives (solid and in aqueous dispersion with an acid index above 60) | 0.5 to 3 % |
| Thickening agent based on cellulose ether | 0.1 to 0.5 % |
| Dispersing agent based on ammonium polyacrylate or potassium polycarboxylate | 0.1 to 2 % |
| Anti-foaming agent | 0.1 to 0.4 % |
| Bactericidal agent | 0.1 to 0.3 % |
| Very fine calcium carbonate and organic pigment | 40 to 60 % |
| Water | balance to 100% |

6. Process for temporarily opaquing translucent or transparent surfaces such as, for example, agricultural or horticultural glasshouse covers made of glass or a hard or soft plastic, **characterised by** applying to said surfaces an opaquing film-forming material as claimed in any of claims 1 to 5, and subsequently removing the layer previously applied and air-dried, by simply spraying on an aqueous cleaning solution containing at least one alkaline agent chosen from the following:
- sodium hydroxide;
- sodium carbonate;
- sodium salt of ethylene diamine tetraacetic acid (EDTA);
the total proportion by weight of which is 0.3 to 3%.
